# EUROPEAN PATENT APPLICATION

(11) **EP 4 575 188 A1**
(43) Date of publication of application: **25.06.2025**
(21) Application number: 23307312.1
(22) Date of filing: 21.12.2023
(51) Int. Cl.: F01D 15/08

(54) **CARBON CAPTURE SYSTEM INCLUDING A BLOWER THAT IS MECHANICALLY COUPLED TO A TURBINE**

(71) Applicant: Technip Energies France, 92741 Nanterre Cedex (FR)
(72) Inventor: SCHENK, Myrian, 92741 Nanterre Cedex (FR); STONE, Andrew, 92741 Nanterre Cedex (FR); STARR, James, 92741 Nanterre Cedex (FR)
(74) Representative: Edson, Russell Gregory

(57) **Abstract**

In one example, a system includes a turbine and a blower. The turbine includes a first shaft that is rotatable in response to flue gas generated by combusting a fossil fuel. The blower includes a second shaft that is coupled to the first shaft of the turbine. The second shaft can rotate in response to a rotation of the first shaft.

## Description

### Technical Field

The present disclosure relates generally to carbon capture systems for capturing carbon dioxide in post-combustion flue gas downstream of industrial processes. More specifically, but not by way of limitation, this disclosure relates to a carbon capture system that includes a blower that is mechanically coupled to a turbine usable to generate electrical power.

### Background

Power plants, refineries, and other industrial facilities often generate carbon dioxide (CO₂) emissions as a byproduct of their primary industrial processes. If the CO₂ emissions are released into the environment, it can have negative environmental consequences. To help mitigate these environmental impacts, carbon capture techniques have been developed. Carbon capture techniques can be used to capture or "scrub" CO₂ from the byproduct emissions. Once captured, the CO₂ can then be stored or used in other processes.

In the context of power generation, power plants burn fossil fuels (e.g., gas or coal) to drive a turbine to generate electricity. Burning fossil fuels can generate flue gas, which is a combustion exhaust gas that may include CO₂ emissions as a byproduct. There are two main categories of carbon capture techniques used to reduce such CO₂ in flue gas: pre-combustion techniques and post-combustion techniques. Pre-combustion techniques trap CO₂ before the fossil fuels are burned, which can reduce the amount of downstream CO₂ in the flue gas. Post-combustion techniques trap CO₂ in the flue gas after the fossil fuels are burned.

Post-combustion techniques can be implemented by a carbon capture plant. A carbon capture plant includes a specialized arrangement of equipment that is designed to capture CO₂ in the flue gas output by an emitter, such as a power plant or another industrial facility. Examples of such specialized equipment can include blowers, pumps, coolers, condensers, and filters. The carbon capture plant is attached to the emitter for receiving and scrubbing the flue gas.

### Summary

One example of the present disclosure includes a system comprising a turbine. The turbine includes a first shaft that is rotatable in response to flue gas generated by combusting a fossil fuel. The system also comprises a blower that includes a second shaft that is coupled to the first shaft of the turbine, the second shaft being rotatable in response to a rotation of the first shaft.

One or more embodiments include the system of any previous paragraph, wherein the second shaft is indirectly connected to the first shaft via a connection device.

One or more embodiments include the system of the previous paragraph, wherein the connection device includes a gear system that couples the first shaft to the second shaft.

One or more embodiments include the system of the previous paragraph, wherein the gear system includes gears sized to rotate the second shaft at a different speed than the first shaft.

One or more embodiments include the system of any previous paragraph, wherein the first shaft and the second shaft are a same shaft, such that the second shaft is rotatable at a same speed as the first shaft.

One or more embodiments include the system of any previous paragraph, wherein the first shaft is directly connected to the second shaft, such that the second shaft is rotatable at a same speed as the first shaft.

One or more embodiments include the system of the previous paragraph, wherein the second shaft is coupled to the first shaft by welding or one or more fasteners.

One or more embodiments include the system of any previous paragraph, wherein the blower is positioned in a flow path for the flue gas, the flow path extending from a combustor associated with the turbine to a carbon capture system, and wherein the blower increases a pressure level of the flue gas prior to the flue gas entering an absorber of the carbon capture system.

One or more embodiments include the system of any previous paragraph, further comprising a generator coupled to the first shaft of the turbine, wherein the generator generates electric power in response to the rotation of the first shaft of the turbine.

One or more embodiments include the system of any previous paragraph, wherein the turbine and the blower are positioned in a power plant.

One or more embodiments include the system of the previous paragraph, wherein the power plant is separate from a carbon capture plant that includes a carbon capture system to which the blower is coupled.

One or more embodiments include the system of any previous paragraph, wherein the blower includes another turbine operates based on the rotation of the first shaft, rather than an external source of electrical power.

One or more embodiments include the system of any previous paragraph, wherein the blower is not connected to an external source of electrical power and excludes electronic components.

Another example of the present disclosure includes a system comprising a blower positionable in a flow path for flue gas emitted by a turbine, wherein the blower includes a first shaft. The system also comprises a connection device that couples the first shaft of the blower to a second shaft of the turbine.

One or more embodiments include the system of the previous paragraph, wherein the connection device indirectly connects the first shaft to the second shaft.

One or more embodiments include the system of any previous paragraph, wherein the connection device includes a gear system that couples the first shaft to the second shaft.

One or more embodiments include the system of the previous paragraph, wherein the gear system includes gears sized to rotate the first shaft at a different speed than the second shaft.

One or more embodiments include the system of any previous paragraph, wherein the blower is positioned in the flow path to increase a pressure level of the flue gas prior to the flue gas entering an absorber of a carbon capture system.

One or more embodiments include the system of any previous paragraph, further comprising the turbine, wherein the blower includes another turbine operates based on a rotation of the first shaft rather than an external source of electrical power.

Another example of the present disclosure includes a method comprising positioning a turbine in a power plant, the turbine being configured to rotate a first shaft in response to flue gas generated by combusting a fossil fuel. The method also comprises positioning a blower in a flow path for the flue gas, the flow path extending from a combustor associated with the turbine to a carbon capture system. The method also comprises coupling a second shaft of the blower to the first shaft of the turbine, the second shaft being configured to rotate in response to a rotation of the first shaft.

### Brief Description of the Drawings

FIG. 1 is a block diagram of an example of a system that includes a power plant with a turbine that is mechanically coupled to a blower according to some aspects of the present disclosure.
FIG. 2 is a block diagram of an example of a carbon capture system that includes a blower that is mechanically coupled to a turbine according to some aspects of the present disclosure.
FIG. 3 is a side view of an example of a turbine that is mechanically coupled to a blower according to some aspects of the present disclosure.
FIG. 4 is a flowchart of an example of a process for mechanically coupling a blower to a turbine according to some aspects of the present disclosure.

### Detailed Description

Certain aspects and features of the present disclosure relate to a carbon capture system for removing carbon dioxide (CO₂) from post-combustion flue gas, where the carbon capture system has a blower that is mechanically coupled to a turbine that assists in generating electrical power. For example, a power plant can include a gas turbine that is driven by the combustion of fossil fuels to generate electrical energy. A byproduct of such combustion can be flue gas that contains CO₂. To help reduce the amount of CO₂ in the flue gas, the power plant can be connected to a carbon capture system. The carbon capture system can include a blower. The blower can itself be a turbine that increases the pressure of the flue gas to a level that is suitable for use with an absorber and other downstream equipment of the carbon capture system. In some examples, the blower can be mechanically coupled (e.g., attached) to the turbine. For example, a first shaft of the blower can be attached to a second shaft of the turbine, so that rotation of the turbine drives the blower. Because of this mechanical coupling, the blower's shaft can rotate in response to rotation of the turbine's shaft.

In a conventional arrangement, a power plant combusts fossil fuels to mechanically rotate a turbine. The mechanical rotation of the turbine is then converted into electricity via a generator. That electricity is then used to power a blower of a carbon capture plant, which converts the electricity back into mechanical rotation. Specifically, the electricity drives a motor of the blower to rotate its shaft. This conversion of mechanical energy into electrical energy and then back to mechanical energy can be inefficient, in that energy is lost in this dual conversion. To help overcome this energy inefficiency, some examples of the present disclosure can mechanically couple the blower to the turbine. This mechanical coupling allows the mechanical rotation of the turbine to drive the blower. Because the blower is driven by the turbine, the blower may not need to be connected to an external source of electrical power (e.g., an electric grid associated with the power plant) or consume electricity to operate. This can result in significant power savings, given that a blower may consume 0.5-10 megawatts (MW) of power or more under normal operating conditions. Additionally, the blower can be manufactured without some or all of its normal electronic components, such as a motor and a power control unit. Excluding these electronic components can make the blower cheaper to manufacture, smaller in size, lighter in weight, and easier to maintain.

In some examples, the blower can be directly mechanically connected to the turbine. For example, a first shaft of the blower can be attached directly to a second shaft of the turbine via welding, press fitting, or fasteners (e.g., screws or bolts). In other examples, the blower can be indirectly mechanically connected to the turbine. For example, the first shaft of the blower can be attached to a gear system, which in turn can be attached to the second shaft of the turbine. The gear system can include one or more gears, which may be configured to rotate the first shaft at a different speed than the second shaft. For instance, the gear system can be configured to rotate the first shaft of the blower at two or more times the speed of the second shaft of the turbine. As one specific example, the system may be configured to rotate the second shaft of the turbine at 15-25 revolutions-per-minute (rpm) and the first shaft of the blower at 100-400 rpm. The gear system may be configured to rotate the blower at any suitable speed, for example to increase the pressure of flue gas to a suitable level for use with an absorber of a carbon capture system.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

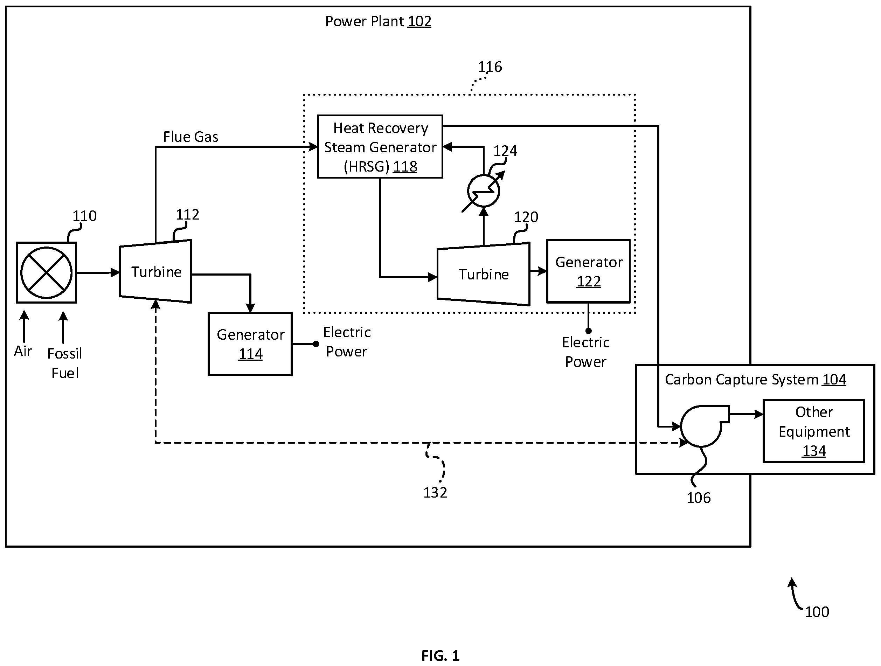

FIG. 1 is a block diagram of an example of a system 100 that includes a power plant 102 with a turbine 112 that is mechanically coupled to a blower 106 according to some aspects of the present disclosure. The power plant 102 is an industrial facility that includes the physical infrastructure for generating large-scale electrical power (e.g., for a power grid). The power plant 102 can include a configuration of equipment for converting fossil fuels into electrical power. For example, the power plant 102 can include a combustor 110 for combusting fossil fuels to generate the flue gas. Although the combustor 110 is shown separately from the turbine 112, the combustor 110 may be part of the turbine 112 in some examples. The flue gas can drive the turbine 112 (e.g., a gas turbine), which can have blades that rotate as the flue gas passes through the blades. The blades are connected to a shaft, so the shaft can also rotate as the blades rotate. The shaft can be connected to an electric generator 114, which can convert the mechanical rotation of the shaft into electric power. The power plant 102 can also include other equipment, such as condensers and compressors, that are not shown in FIG. 1 for simplicity.

In some examples, the flue gas is transmitted to a carbon capture system for processing. The flue gas may be transmitted through other equipment 116 of the power plant 102 prior to reaching the carbon capture system 104. For example, the flue gas may be transmitted through a pre-treatment scrubber prior to reaching the carbon capture system 104. As another example, the flue gas can be transmitted through a heat recovery steam generator 118, which can be coupled to a secondary turbine 120, a secondary generator 122, and a condenser 124, among other components. These components may be arranged to extract additional energy from the flue gas and convert it to additional electric power. For instance, the HRSG 118 can recover heat from the flue gas and use the heat to produce steam, which can drive the secondary turbine 120 and the secondary generator 122 to generate the additional electric power.

In some examples, the flue gas is transmitted through a blower 106 that is mechanically coupled to a turbine, such as the turbine 112 or the turbine 120. One example of this mechanical coupling is represented by a dashed line 132 in FIG. 1. The blower 106 can be positioned in a flow path for the flue gas that extends from the combustor 110 associated with the turbine 112 to other equipment 134 of the carbon capture system 104, such as an absorber. Because the blower 106 is mechanically coupled to the turbine, the blower 106 can rotate in response to a mechanical rotation of the turbine. Rotation of the blower 106 can increase the pressure level of the flue gas to a suitable level for use with the absorber and other equipment 134 of the carbon capture system 104. The flue gas can then be processed by the absorber and the other equipment 134 to extract CO₂ or other byproducts from the flue gas.

As shown, at least some parts of the carbon capture system 104 can be positioned inside the power plant 102 and other parts of the carbon capture system 104 may be positioned outside the power plant 102. For example, the blower 106 can be positioned inside the power plant 102 and the other equipment 134 can be positioned in a carbon capture plant that is separate from the power plant 102. Any suitable configuration of equipment can be implemented, so long as the blower 106 is mechanically coupled to a turbine (e.g., turbine 112 or turbine 120).

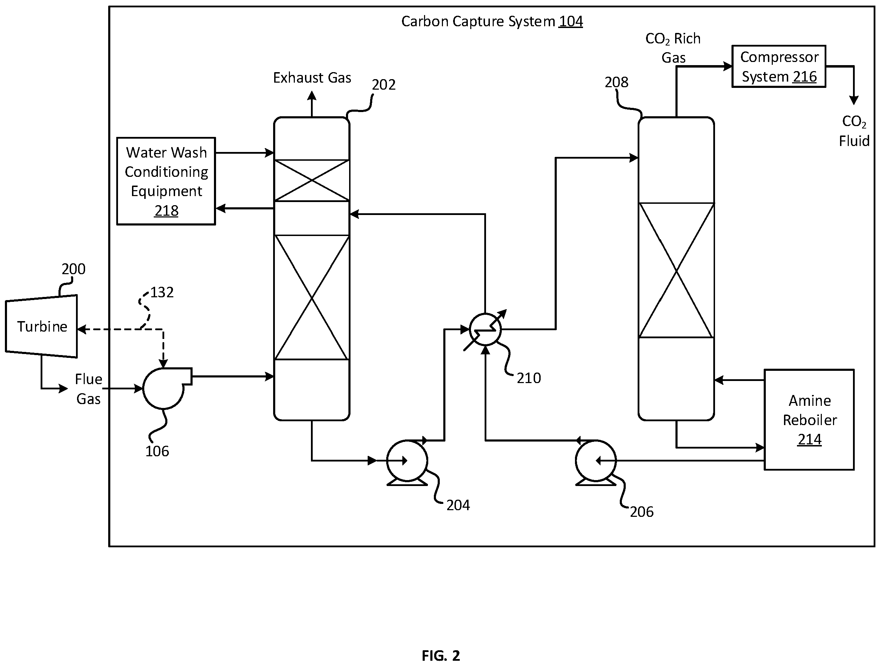

More details about the carbon capture system 104 are shown in FIG. 2. As shown, the carbon capture system 104 includes a blower 106 that is mechanically coupled to a turbine 200. This mechanical coupling is represented by the dashed line 132. The turbine 200 can be configured to assist in generating electrical power at a power plant or elsewhere. To operate the turbine 200, a fossil fuel may be combusted. This combustion can generate flue gas. The blower 106 can be positioned in a flow path (e.g., the one or more conduits) for the flue gas, where the flow path is for transmitting the flue gas to an inlet of an absorber 202. The absorber 202 can receive the flue gas at the inlet. When the flue gas enters the absorber 202, it may be more than 3% CO₂ and in some cases more than 25% CO₂. After going through the carbon capture process, the flue gas may be less than 2% CO₂.

In some examples, the carbon capture system 104 can include equipment other than the blower 106 in the flow path prior to the absorber 202. The equipment can interact with the flue gas before it reaches the absorber 202. For example, the carbon capture system 104 can include a cooling tower (e.g., a heat exchanger) in the flow path and prior to the inlet of the absorber 202. The cooling tower can reduce the temperature of the flue gas to a suitable level for use with the absorber 202.

After receiving the flue gas, the absorber 202 can transport the flue gas through a solution that contains amines. The CO₂ in the flue gas can bind with the amines to create carbon-reduced (e.g., carbon-free) flue gas. More specifically, the absorption process can make use of the reversable nature of the chemical reaction of an aqueous alkaline solvent, usually an amine, with an acid or sour gas. At the absorber 202, which can typically have temperatures of 40-60°C, the CO₂ is bound by the chemical amine solvent. The flue gas may then undergo a water wash section to balance water in the system and to remove any solvent droplets or solvent vapor carried over, before leaving the absorber. The carbon-reduced flue gas can be vented from the absorber 202 as exhaust gas. Next, the CO₂-rich amine solution can be transmitted to a stripper 208, at which point the amine solution can be heated or reboiled with steam or another heat source. Again, making use of the reversable nature of the chemical reaction, the high temperatures in the stripper 208 can separate the CO₂ from the amine, thereby producing a CO₂ stream that is relatively pure. In some cases, the stripper 208 may apply heat of 100-140°C. The stripper 208 may have an internal pressure at or around that of atmospheric pressure. The resulting CO₂ stream may be referred to herein as a CO₂ rich gas. The amine solution can then be returned to the absorber 202 for reuse. The CO₂ rich gas can continue to a compressor 216, which can turn it into a liquid. The liquid can then be piped or shipped to its final destination, for example to be sold or buried safely underground.

To effectuate the above process, the carbon capture system 104 can include various additional pieces of equipment. Some of this equipment is shown in FIG. 2, though not all such equipment is shown for simplicity. As shown, the carbon capture system 104 can include a first pump 204 to pump the amine-rich solution to the stripper 208, a second pump 206 to pump the amine-lean solution back to the absorber 202, and an exchanger 210 to facilitate this transfer of amine solution. The first pump 204 and the second pump 206 can be coupled to the exchanger 210, which in turn can be coupled to the absorber 202 and the stripper 208. Other components, such as a filter, may also be positioned between exchanger 210 and the absorber 202 to facilitate this process.

In some examples, the carbon capture system 104 may also include an amine reboiler 214 and water wash conditioning equipment 218. The amine reboiler 214 can provide heat to the stripper 208 to remove CO₂ from the amine solution, so that the amine solution can be reused in the absorber 202. The water wash conditioning equipment 218 can correspond to a water wash section of the absorber 202. The water wash section can be configured to water wash the flue gas after CO₂ absorption to reduce solvent emissions. The water wash conditioning equipment 218 can include a pump and a cooler (e.g., a heat exchanger), which can be connected together to perform these functions.

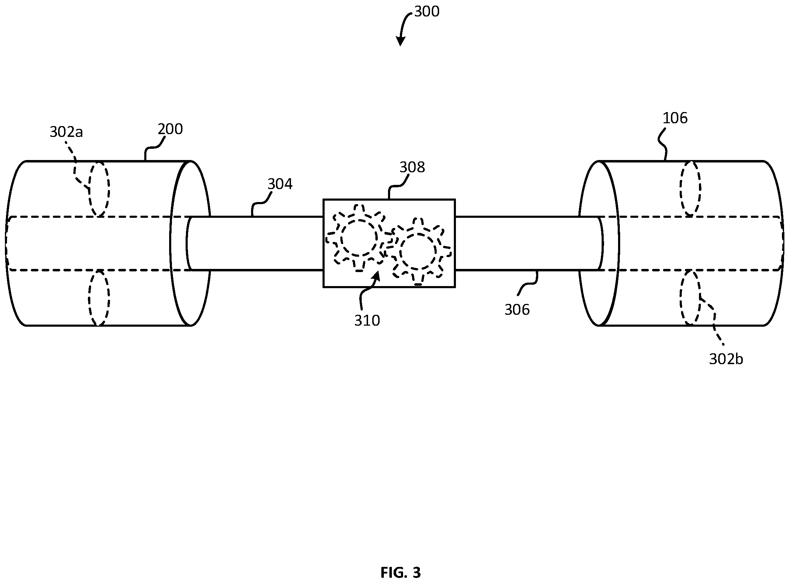

Turning now to FIG. 3, shown is a side view of an example of a blower 106 that is mechanically coupled to a turbine 200 according to some aspects of the present disclosure. The turbine 200 can include a shaft 304 with one or more attached blades 302a. The shaft 304 can be configured to rotate as flue gas passes through the blades 302a. The blower 106 also includes a shaft 306 with one or more attached blades 302b. The shaft 306 can rotate the blades 302b as flue gas passes through the blades 302b to change a pressure level of the flue gas.

The shaft 304 of the turbine 200 can be directly or indirectly connected to the shaft 306 of the blower 106. For example, the shaft 304 of the turbine 200 can be mechanically coupled to the shaft 306 of the blower 106 by welding, press fitting, or a connection device 308. The connection device 308 can be configured to connect the shaft 304 of the turbine 200 to the shaft 306 of the blower 106. Examples of the connection device 308 can include one or more joints, one or more fasteners (e.g., bolts, screws, nails, clamps, or clips), a gear system 310, or any combination of these. In some examples, the gear system 310 can include two or more gears. The gears may be sized and interconnected to cause the shaft 306 of the blower 106 to rotate at the same speed as, or at a different speed than, the shaft 304 of the turbine 200.

The shaft 304 of the turbine 200 can be mechanically coupled to the shaft 306 of the blower 106 at any suitable time. For example, the shaft of the turbine 200 can be coupled to the shaft 306 of the blower 106 as prior to their delivery to the power plant. Alternatively, the shaft of the turbine 200 can be coupled to the shaft 306 of the blower 106 onsite at the power plant.

In some examples, the turbine 200 and the blower 106 can share the same shaft. That is, the shaft 304 of the turbine 200 can be the same as the shaft 306 of the blower 106. In some such examples, the turbine 200 and the blower 106 can be manufactured or distributed as a single unit with a common shaft. In this configuration, the shaft 306 of the blower 106 can rotate at the same speed as the shaft 304 of the turbine 200.

Because of the rotation of the turbine 200 can drive the blower 106, the blower 106 can be configured without some or all of its normal electronic components, such as a motor, a power control unit for managing electrical power, circuitry, buttons, wires, connectors to an external power source, etc. For example, the blower 106 can be manufactured without any operable electronic components. This may reduce the footprint of the blower 106, make it easier and cheaper to manufacture the blower 106, and make the blower 106 less prone to failure.

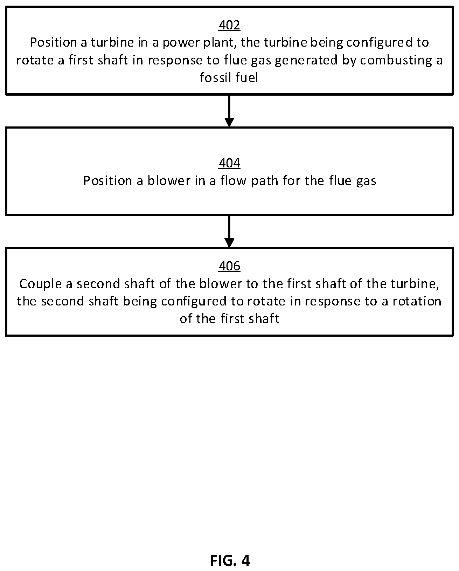

Turning now to FIG. 4, shown is a flowchart of an example of a process for mechanically coupling a blower 106 to a turbine 200 according to some aspects of the present disclosure. Other examples may include more operations, fewer operations, different operations, or a different sequence of operations than is shown. The operations of FIG. 4 are described below with reference to the components of FIGS. 1-3 above.

In block 402, a turbine 200 is positioned in a power plant 102. Examples of the turbine 200 can include the turbine 112 and the turbine 120. The turbine 200 can be configured to rotate a first shaft 304 in response to flue gas generated by combusting a fossil fuel, such as coal or natural gas.

In other examples, the turbine 200 can be positioned at a location other than a power plant, such as an industrial manufacturing facility. At that location, the turbine 200 can be used for generating electrical power or for another purpose. In some such examples, the turbine 200 may still be driven by combustion that generates a flue gas containing a gaseous byproduct (e.g., CO₂), which it may be desirable to capture using a carbon capture system 104.

In block 404, a blower 106 is positioned in a flow path for the flue gas. The flow path can extend from the combustor 110 to the carbon capture system 104 (e.g., one or more components of the carbon capture system 104). The flow path may include one or more intervening pieces of equipment between the combustor 110 and the carbon capture system 104. The flow path can be defined by one or more conduits that are configured to carry the flue gas from the combustor 110 to the carbon capture system 104. The carbon capture system 104 may include the blower 106 and other equipment 134, such as an absorber 202 and a stripper 208.

In block 406, a second shaft 306 of the blower 106 is coupled to the first shaft 304 of the turbine 200. Based on this coupling, the second shaft 306 of the blower 106 can be configured to rotate in response to a rotation of the first shaft 304 of the turbine 200. In some examples, the second shaft 306 of the blower 106 may be directly coupled to the first shaft 304 of the turbine 200. For example, the second shaft 306 can be welded or press fitted inside the first shaft 304 (or vice-versa). Alternatively, the second shaft 306 may be indirectly coupled to the first shaft 304 via a connection device 308, such as a gear box. The connection device 308 can couple a first end of the first shaft 304 to a second end of the second shaft 306, to transfer mechanical motion from the first shaft 304 to the second shaft 306.

Although block 406 is shown as the last operation in FIG. 4, in other examples this operation may precede one or both of blocks 402-404. For example, the blower 106 and the turbine 200 may be coupled together offsite from the power plant 102. The blower 106 and the turbine 200 may then be delivered to the power plant 102 as a pre-connected unit. In other examples, the blower 106 may be coupled to the turbine 200 onsite at the power plant 102. In some such examples, the blower 106 may be coupled to the turbine 200 after the turbine 200 is positioned at the power plant 102 and prior to the blower 106 being installed in the flow path for the flue gas (e.g., prior to the blower 106 being connected to the conduits that define the flow path).

While the above examples involve a turbine 200 that is mechanically coupled to a blower 106, it will be appreciated that the turbine 200 can additionally or alternatively be mechanically coupled to any other device that rotates, such as a pump, a gas compressor, or a fan. For instance, the shaft 304 of the turbine 200 can be coupled to a shaft (or other rotational component) of a pump, which may be part of the power plant 102 or the carbon capture system 104. In this way, the mechanical rotation of the turbine 200 can additionally or alternatively be used to drive any other rotatable device as desired. This may allow such rotatable devices to be manufactured cheaper, smaller, lighter, and without one or more of their normal electronic components.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A system comprising:
a turbine that includes a first shaft that is rotatable in response to flue gas generated by combusting a fossil fuel; and
a blower that includes a second shaft that is coupled to the first shaft of the turbine, the second shaft being rotatable in response to a rotation of the first shaft.

2. The system of claim 1, wherein the second shaft is indirectly connected to the first shaft via a connection device; optionally, wherein the connection device includes a gear system that couples the first shaft to the second shaft; further optionally, wherein the gear system includes gears sized to rotate the second shaft at a different speed than the first shaft.

3. The system of claim 1, wherein the first shaft and the second shaft are a same shaft, such that the second shaft is rotatable at a same speed as the first shaft.

4. The system of claim 1, wherein the first shaft is directly connected to the second shaft, such that the second shaft is rotatable at a same speed as the first shaft; optionally, wherein the second shaft is coupled to the first shaft by welding or one or more fasteners.

5. The system of claim 1, wherein the blower is positioned in a flow path for the flue gas, the flow path extending from a combustor associated with the turbine to a carbon capture system, and wherein the blower increases a pressure level of the flue gas prior to the flue gas entering an absorber of the carbon capture system.

6. The system of claim 1, further comprising a generator coupled to the first shaft of the turbine, wherein the generator generates electric power in response to the rotation of the first shaft of the turbine.

7. The system of claim 1, wherein the turbine and the blower are positioned in a power plant; optionally, wherein the power plant is separate from a carbon capture plant that includes a carbon capture system to which the blower is coupled.

8. The system of claim 1, wherein the blower includes another turbine that operates based on the rotation of the first shaft, rather than an external source of electrical power.

9. The system of claim 1, wherein the blower is not connected to an external source of electrical power and excludes electronic components.

10. A system comprising:
a blower positionable in a flow path for flue gas emitted by a turbine, wherein the blower includes a first shaft; and
a connection device coupling the first shaft of the blower to a second shaft of the turbine.

11. The system of claim 10, wherein the connection device indirectly connects the first shaft to the second shaft.

12. The system of claim 10, wherein the connection device includes a gear system that couples the first shaft to the second shaft; optionally, wherein the gear system includes gears sized to rotate the first shaft at a different speed than the second shaft.

13. The system of claim 10, wherein the blower is positioned in the flow path to increase a pressure level of the flue gas prior to the flue gas entering an absorber of a carbon capture system.

14. The system of claim 10, further comprising the turbine, wherein the blower includes another turbine that operates based on a rotation of the first shaft rather than an external source of electrical power.

15. A method comprising:
positioning a turbine in a power plant, wherein the turbine rotates a first shaft in response to flue gas generated by combusting a fossil fuel;
positioning a blower in a flow path for the flue gas, the flow path extending from a combustor associated with the turbine to a carbon capture system; and
coupling a second shaft of the blower to the first shaft of the turbine, wherein the second shaft rotates in response to a rotation of the first shaft.
